# FASCICULE DE BREVET EUROPEEN

(11) **EP 3 355 460 B1**
(45) Date de publication et mention de la délivrance du brevet: **27.05.2020**
(21) Numéro de dépôt: 18152470.3
(22) Date de dépôt: 19.01.2018
(51) Int. Cl.: H02M 3/156, H05B 33/08

(54) **DISPOSITIF DE PILOTAGE DE L'ALIMENTATION DE SOURCES LUMINEUSES D'UN VÉHICULE AUTOMOBILE**
STEUERVORRICHTUNG DER STROMZUFÜHRUNG ZU DEN LEUCHTQUELLEN EINES KRAFTFAHRZEUGS
DEVICE FOR CONTROLLING THE POWER SUPPLY OF LIGHT SOURCES OF A MOTOR VEHICLE

(30) Priorité: 26.01.2017 FR 1750624
(43) Date de publication de la demande: 01.08.2018
(73) Titulaire: Valeo Vision, 93012 Bobigny Cedex (FR)
(72) Inventeur: BOUDIKIAN, David, 93012 Bobigny Cedex (FR); ALVES, Jean-Philippe, 93012 Bobigny Cedex (FR); GUILLOT, Bernard, 93012 Bobigny Cedex (FR); JAUREGI, Irantzu, 93012 Bobigny Cedex (FR)
(74) Mandataire: Valeo Vision

(56) Documents cités:
- DE-A1-102012 203 745
- US-A1- 2006 126 367
- US-A1- 2016 344 403

## Description

L'invention a trait au domaine de l'alimentation électrique de sources lumineuse d'un véhicule automobile. En particulier l'invention se rapporte à des sources lumineuses dont l'intensité du flux lumineux est réglable par le biais d'un signal de modulation de largeur d'impulsion.

Il devient de plus en plus courant d'utiliser des sources lumineuses à élément semi-conducteur, telles que des diodes électroluminescentes, LEDs, pour réaliser différentes fonctions lumineuses d'un véhicule. Ces fonctions peuvent par exemple inclure les feux diurnes, les feux de position, les indicateurs de direction ou les feux de croisement. De manière connue, un dispositif de pilotage de l'alimentation électrique est nécessaire pour alimenter un groupe de LEDs réalisant une fonction lumineuse donnée. Un tel dispositif de pilotage comprend en général un convertisseur qui, à partir d'une tension continue d'entrée fournie par une source interne au véhicule, telle qu'une batterie, est apte à générer une tension de sortie de valeur appropriée à l'alimentation du groupe de LEDs. Une LED émet de la lumière lorsqu'une tension d'au moins une valeur seuil, appelée tension directe, est appliquée à ses bornes. L'intensité du flux lumineux émis par une LED augmente en général avec l'intensité moyenne du courant électrique qui la traverse, au-delà de la valeur seuil du courant direct.

Des convertisseurs connus comprennent des convertisseurs de type SEPIC (de l'anglais « Single-Ended Primary Inductor Converter »), Flyback, élévateur de tension (« boost ») ou abaisseur de tension (« buck »). De tels convertisseurs font intervenir un élément interrupteur, tel qu'un transistor, dont l'état est périodiquement commuté entre les valeurs ouvertes et fermées. La fréquence de découpage appliquée à l'interrupteur influence la valeur de la tension de sortie et la valeur moyenne du courant de sortie.

Il est en outre connu de régler l'intensité lumineuse des sources lumineuses alimentées ainsi, en appliquant un signal de modulation de largeur d'impulsion PWM (« pulse width modulation ») ayant un rapport cyclique et un courant de crête donnés, au convertisseur à découpage. La fréquence du signal de modulation de largeur d'impulsion ainsi que le rapport cyclique de ce signal ont un impact sur le courant électrique traversant les sources lumineuses. En adaptant la fréquence du signal de modulation de largeur d'impulsion ou son rapport cyclique, une intensité de courant moyenne prédéterminée peut ainsi être obtenue au niveau du convertisseur. Ceci implique, au niveau des sources lumineuses alimentées, qu'un flux lumineux d'une intensité correspondante à l'intensité moyenne du courant qui les traverse est émis. Plus l'intensité moyenne du courant qui traverse les sources lumineuses est importante, plus l'intensité du flux lumineux émis par les sources lumineuses est importante. La fréquence ou le rapport cyclique du signal PWM permettent donc d'implémenter une fonction de d'atténuation du flux lumineux émis par les sources lumineuses.

Cependant, il s'avère que, si la tension d'entrée du convertisseur est sujette à des perturbations, ayant par exemple une fréquence entre 100 et 1000Hz et une amplitude pouvant atteindre 5V, l'alimentation en sortie du convertisseur devient sujette à d'importantes ondulations et l'intensité du flux lumineux émis par les sources lumineuses n'a plus une apparence uniforme, mais est sujette à des vacillements visibles et non-désirables.

L'invention a pour objectif de pallier au moins un des problèmes posés par l'art antérieur. En particulier, l'invention a pour objectif de proposer un dispositif de pilotage de l'alimentation électrique de sources lumineuses commandées par un signal de type PWM pour implémenter une fonction d'atténuation du flux lumineux émis par les sources lumineuses, qui soit robuste par rapport à des perturbations périodiques au niveau de la tension d'entrée fournie au dispositif, et qui élimine les vacillements visibles du flux lumineux dans des solutions connues de l'état de l'art.

L'invention a pour objet un dispositif de pilotage de l'alimentation électrique d'au moins une branche de circuit électronique comprenant au moins une source lumineuse d'un véhicule automobile. Le dispositif comprend un circuit convertisseur configuré pour convertir une alimentation d'entrée, et notamment une tension d'entrée, en une alimentation de sortie, notamment une tension ou un courant de charge, appliquée à ladite branche de circuit, et des moyens de commande configurés pour commander le circuit convertisseur moyennant un signal périodique S ayant une fréquence prédéterminée f. Le dispositif est remarquable en ce qu'il comprend :
- des moyens de détection configurés pour détecter une perturbation au niveau de la tension d'entrée, et pour déterminer la fréquence fₚ de cette perturbation ; et
- des moyens d'adaptation configurés pour modifier la fréquence dudit signal périodique S en fonction de la fréquence fₚ détectée de la perturbation.

Avantageusement, les moyens de détection peuvent être configurés pour déterminer des variations de la fréquence fₚ détectée de la perturbation.

Avantageusement, les moyens d'adaptation sont configurés pour modifier la fréquence du signal périodique S directement en fonction de la fréquence fₚ de la perturbation.

De manière préférentielle, le dispositif comprend, en outre, des moyens de comparaison configurés pour comparer la fréquence fₚ détectée de la perturbation à la fréquence f prédéterminée dudit signal périodique, et les moyens d'adaptation sont configurés pour modifier la fréquence dudit signal périodique en fonction du résultat de ladite comparaison.

De préférence, les moyens de détection peuvent être configurés pour générer un signal périodique binaire ayant sensiblement la fréquence détectée, et à transmettre le signal périodique binaire aux moyens de comparaison.

Les moyens de détection peuvent de préférence comprendre un circuit électronique.

De manière préférentielle, le dispositif peut comprendre un élément microcontrôleur programmé pour réaliser les moyens de comparaison et/ou d'adaptation.

Les moyens d'adaptation peuvent de préférence être configurés pour modifier la fréquence dudit signal périodique si la différence entre les fréquences comparées est inférieure à un seuil prédéterminé. Le seuil prédéterminé pour la différence peut de préférence être compris entre 200 et 500 Hz.

De préférence, le signal périodique peut être modifié de manière à ce que sa fréquence ne corresponde pas substantiellement à la fréquence détectée du signal de perturbation, ou à des fréquences harmoniques de cette dernière
De manière préférée, le circuit convertisseur peut être un circuit à découpage de type SEPIC, (« Single Ended Primary Inductor Converter »).

Le signal périodique S généré par les moyens de commande peut de préférence être un signal à modulation de largeur d'impulsion, destiné à commander l'intensité du flux lumineux émis par les sources lumineuses.

L'invention a également pour objet un module lumineux pour un véhicule automobile comprenant au moins une source lumineuse et un dispositif de pilotage de l'alimentation électrique de la source lumineuse. Le module est remarquable en ce que le dispositif de pilotage est conforme à l'invention.

De préférence, les sources lumineuses peuvent être des sources à élément semi-conducteur électroluminescent. Il peut par exemple s'agir de diodes électroluminescentes, LED, ou de diodes Laser.

Le dispositif selon l'invention permet de piloter l'alimentation électrique de sources lumineuses moyennant un circuit convertisseur de manière robuste par rapport à des perturbations de la tension continue fournie à l'entrée du circuit convertisseur. Cette robustesse se manifeste en particulier par l'obtention d'un flux lumineux à apparence uniforme et constante dans le temps, lorsqu'un signal périodique perturbe la tension d'entrée.

D'autres caractéristiques et avantages de la présente invention seront mieux compris à l'aide de la description exemplaire et des dessins parmi lesquels :
- la figure 1 est une illustration schématique d'un dispositif selon un mode de réalisation préféré de l'invention ;
- la figure 2 est un schéma électronique représentant des moyens de détection selon un mode de réalisation préféré de l'invention.

Sauf indication spécifique du contraire, des caractéristiques techniques décrites en détails pour un mode de réalisation donné peuvent être combinées aux caractéristiques techniques décrites dans le contexte d'autres modes de réalisation décrits à titre exemplaire et non limitatif.

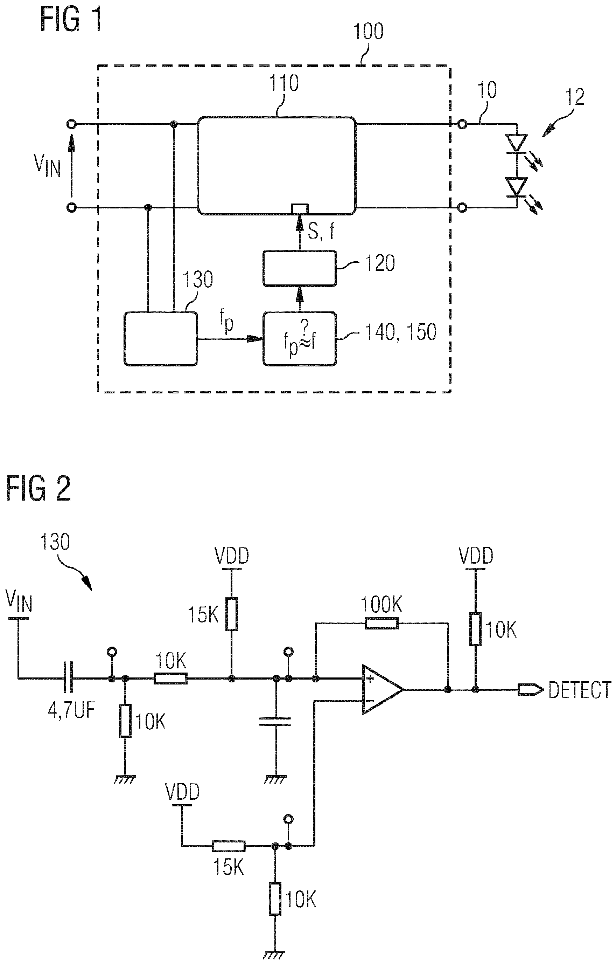

La figure 1 montre un dispositif 100 de pilotage de l'alimentation électrique d'une branche 10 de circuit électronique. La branche comprend, à titre exemplaire et non limitatif, un montage en série de deux diodes électroluminescentes, LED, 12. Le dispositif comprend un circuit convertisseur 110 qui est agencé pour convertir une tension d'entrée V_{IN} en une tension ou un courant de charge, dont la valeur est adaptée à l'alimentation de toutes les LEDs 12 de la branche 10 montée en charge. La tension d'entrée V_{IN} est de préférence une tension continue fournie par exemple par une batterie interne au véhicule automobile qui est équipé du dispositif 100. Le circuit convertisseur 110 est un circuit à découpage en soi connu dans l'art. Le fonctionnement d'un tel circuit convertisseur ne sera pas décrit en détails dans le cadre de la présente invention. Il s'agit par exemple d'un circuit élévateur de tension de type boost, d'un circuit abaisseur de tension de type buck, ou d'un circuit de type SEPIC (« Single-Ended Primary Inductor Converter »). Dans de tels circuits convertisseurs, la fréquence de découpage impacte la valeur de la tension de sortie.

Le dispositif 100 comprend également des moyens de commande 120 agencés pour commander le circuit convertisseur 110 à l'aide d'un signal périodique S, comme par exemple de modulation de largeur d'impulsion PWM (« pulse width modulation »). La fréquence du signal impacte de manière directe l'intensité moyenne du courant électrique fourni par le convertisseur 110 à la branche de charge 10. Comme l'intensité du flux lumineux émis par les sources 12 de la branche 10 est une fonction croissante de l'intensité moyenne du courant qui les traverse, cette configuration permet de réaliser une fonction d'atténuation lumineuse en dépendance de la fréquence f du signal S fourni par les moyens de commande. Selon un mode de réalisation avantageux, les moyens de commande 110 sont réalisés à l'aide d'un élément microcontrôleur programmé à cet effet.

Le circuit convertisseur est configuré pour prendre en charge une tension continue ou sensiblement continue (ayant des perturbations à très basse fréquence) V_{IN}. Néanmoins, il est possible que le signal de tension V_{IN} soit perturbé par des signaux parasites. La perturbation peut être introduite de manière préméditée, par exemple lors d'un test du dispositif 100, ou de manière accidentelle, à cause d'un élément électronique perturbateur extérieur au dispositif 100 et à la source de tension qui fournit V_{IN} Sans autres mesures et de manière connue, lorsque le rapport cyclique d'activation du convertisseur est bref, la boucle d'asservissement du circuit convertisseur est trop lente pour s'adapter à la perturbation, qui est par conséquent reflétée dans la tension/le courant de sortie.

Le dispositif comprend des moyens de détection 130 ayant comme entrée le signal de tension V_{IN} et comme sortie la fréquence fₚ d'une éventuelle perturbation détectée dans le signal V_{IN}. Le signal V_{IN} devrait, en l'absence de perturbations, être sensiblement constant. La sortie des moyens de détection 130 peut également comprendre un signal représentatif de la fréquence d'une perturbation détectée.

A titre purement exemplatif et non limitatif, la figure 2 montre un schéma électronique qui sert à implémenter les moyens de détection 130. La borne de sortie est indiquée par le mot « DETECT ». Le signal de sortie équivaut dans ce cas à un signal binaire d'allure carrée ayant pour fréquence la fréquence fₚ de la perturbation du signal d'entrées V_{IN}. Evidemment, d'autres implémentations des moyens de détection 130 sont à la portée de l'homme du métier. Pour autant que les fonctionnalités décrites soient respectées, des solutions alternatives ne sortent pas du cadre de la présente invention.

Comme indiqué sur la figure 1, la fréquence de perturbation fₚ détectée par les moyens de détection 130 est fournie comme entrée à des moyens de comparaison 140. Les moyens de comparaison 140 sont de préférence réalisés par un élément microcontrôleur. Ils ont accès à la valeur f du signal S, à l'aide duquel le circuit convertisseur 110 est commandé. L'accès à cette valeur de fréquence est par exemple réalisé en reliant le microcontrôleur 140 au microcontrôleur 120, en utilisant un élément de mémoire partagée, ou en intégrant l'implémentation des moyens de commande et de comparaison dans un même élément microcontrôleur. Les moyens de comparaison 140 sont configurés pour comparer la fréquence prédéterminée f du signal s à la fréquence de perturbation fₚ détectée par les moyens de détection 130. De manière équivalente, les moyens de comparaison peuvent être configurés pour comparer un signal à allure carrée de fréquence f à un signal à allure carrée de fréquence fₚ. Lorsque la valeur absolue de la différence entre les deux fréquences comparées est inférieure à une valeur seuil prédéterminée, les moyens d'adaptation 150, qui peuvent à titre exemplaire être réalisés par le même élément microcontrôleur que les moyens de comparaison 140, sont amenés à modifier la fréquence f du signal S. La valeur seuil est avantageusement stockée dans un élément de mémoire et se situe par exemple entre 200 et 500Hz. Si la fréquence fₚ correspond substantiellement à la fréquence f ou à une des fréquences harmoniques de la fréquence f, les moyens d'adaptation sont configurés pour changer la fréquence f de façon à ce que la différence entre la fréquence adaptée fₐ, qui est la version adaptée de la fréquence f du signal S, et la fréquence de perturbation fₚ soit supérieure à la valeur seuil prédéterminée. Alternativement, la fréquence adaptée fₐ n'est pas substantiellement égale à la fréquence f ou à une des fréquences harmoniques de cette dernière. Par conséquent, les moyens de commande 120 adaptent la fréquence du signal S de commande en utilisant la fréquence fₐ ainsi adaptée. Il a été observé que ces mesures conformes à l'invention permettent de détecter des perturbations périodiques du signal de tension d'entrée V_{IN} en temps réel, et d'adapter la fréquence du signal S de manière à éviter tout effet apparent de vacillation de l'intensité du flux lumineux émis par les sources lumineuses 12.

## Revendications

1. Dispositif (100) de pilotage de l'alimentation électrique d'au moins une branche (10) de circuit électronique comprenant au moins une source lumineuse (12) d'un véhicule automobile, le dispositif (100) comprenant un circuit convertisseur (110) configuré pour convertir une tension d'entrée V_{IN}, à courant continu constant en une tension de charge, appliquée à ladite ou moins une branche de circuit (10), et des moyens de commande (120) configurés pour commander le circuit convertisseur (110) moyennant un signal périodique S ayant une fréquence f prédéterminée,
**caractérisé en ce que** le dispositif comprend
des moyens de détection (130) configurés pour détecter une perturbation au niveau de la tension d'entrée V_{IN}, et pour déterminer la fréquence fₚ de cette perturbation ;
des moyens d'adaptation (150) configurés pour modifier la fréquence dudit signal périodique S en fonction de la fréquence fₚ détectée de la perturbation.

2. Dispositif selon la revendication 1, **caractérisé en ce que** ledit dispositif comprend, en outre, des moyens de comparaison (140) configurés pour comparer la fréquence fₚ détectée de la perturbation à la fréquence f prédéterminée dudit signal périodique, et les moyens d'adaptation (150) sont configurés pour modifier la fréquence dudit signal périodique en fonction du résultat de ladite comparaison.

3. Dispositif selon la revendication 2, **caractérisé en ce que** les moyens de détection sont configurés pour générer un signal périodique binaire ayant la fréquence détectée, et à transmettre le signal périodique binaire aux moyens de comparaison.

4. Dispositif selon une des revendications 1 à 3, **caractérisé en ce que** les moyens de détection comprennent un circuit électronique.

5. Dispositif selon une des revendications 1 à 4, **caractérisé en ce qu'**il comprend un élément microcontrôleur programmé pour réaliser les moyens de comparaison et/ou d'adaptation.

6. Dispositif selon une des revendications 1 à 5, **caractérisé en ce que** les moyens d'adaptation sont configurés pour modifier la fréquence dudit signal périodique si la différence entre les fréquences comparées est inférieure à un seuil prédéterminé.

7. Dispositif selon une des revendications 1 à 6, **caractérisé en ce que** le circuit convertisseur est un circuit à découpage de type SEPIC, (« Single Ended Primary Inductor Converter »).

8. Dispositif selon une des revendications 1 à 7, **caractérisé en ce que** le signal périodique S générépar les moyens de commande est un signal à modulation de largeur d'impulsion, destiné à commander l'intensité du flux lumineux émis par les sources lumineuses.

9. Module lumineux pour un véhicule automobile comprenant au moins une source lumineuse et un dispositif de pilotage de l'alimentation électrique de la source lumineuse, **caractérisé en ce que** le dispositif de pilotage est conforme à une des revendications 1 à 8.

10. Module lumineux selon la revendication 9, **caractérisé en ce que** les sources lumineuses sont des sources à élément semi-conducteur électroluminescent.

## Patentansprüche

1. Vorrichtung (100) zur Steuerung der elektrischen Versorgung wenigstens eines Zweigs (10) einer elektronischen Schaltung, die wenigstens eine Lichtquelle (12) eines Kraftfahrzeugs umfasst, wobei die Vorrichtung (100) eine Wandlerschaltung (110), die so konfiguriert ist, dass sie eine Eingangsgleichspannung V_{IN} in eine an den wenigstens einen Schaltungszweig (10) angelegte Lastspannung, insbesondere eine Lastspannung, umwandelt, und Steuermittel (120) umfasst, die so konfiguriert sind, dass sie die Wandlerschaltung (110) mit Hilfe eines periodischen Signals S mit einer vorbestimmten Frequenz f steuern,
dass die Vorrichtung Folgendes umfasst
Detektionsmittel (130), die so konfiguriert sind, dass sie eine Störung in der Eingangsspannung V_{IN} erkennen und die Frequenz fp dieser Störung bestimmen;
Anpassungsmittel (150), die so konfiguriert sind, dass sie die Frequenz des genannten periodischen Signals S als Funktion der erfassten Frequenz fp der Störung modifizieren.

2. Vorrichtung nach Anspruch 1, **dadurch gekennzeichnet, dass** die genannte Vorrichtung ferner Vergleichsmittel (140) umfasst, die so konfiguriert sind, dass sie die erfasste Frequenz fp der Störung mit der vorbestimmten Frequenz f des genannten periodischen Signals vergleichen, und dass Anpassungsmittel (150) so konfiguriert sind, dass sie die Frequenz des genannten periodischen Signals entsprechend dem Ergebnis des genannten Vergleichs modifizieren.

3. Vorrichtung nach Anspruch 2, **dadurch gekennzeichnet, dass** die Erfassungsmittel so konfiguriert sind, dass sie ein binäres periodisches Signal mit der erfassten Frequenz erzeugen und das binäre periodische Signal an die Vergleichsmittel übertragen.

4. Vorrichtung nach einem der Ansprüche 1 bis 3, **dadurch gekennzeichnet, dass** die Detektionsmittel eine elektronische Schaltung umfassen.

5. Vorrichtung nach einem der Ansprüche 1 bis 4, **dadurch gekennzeichnet, dass** sie ein Mikrocontroller-Element umfasst, das so programmiert ist, dass es die Mittel zum Vergleich und/oder zur Anpassung ausführt.

6. Vorrichtung nach einem der Ansprüche 1 bis 5, **dadurch gekennzeichnet, dass** die Anpassungsmittel so konfiguriert sind, dass sie die Frequenz des genannten periodischen Signals modifizieren, wenn die Differenz zwischen den verglichenen Frequenzen kleiner als ein vorbestimmter Schwellenwert ist.

7. Vorrichtung nach einem der Ansprüche 1 bis 6, **dadurch gekennzeichnet, dass** die Wandlerschaltung eine SEPIC (Single Ended Primary Inductor Converter)-Schaltung ist.

8. Vorrichtung nach einem der Ansprüche 1 bis 7, **dadurch gekennzeichnet, dass** das von der Steuereinrichtung erzeugte periodische Signal S ein pulsbreitenmoduliertes Signal zur Steuerung der Intensität des von den Lichtquellen ausgesandten Lichtstroms ist.

9. Lichtmodul für ein Kraftfahrzeug, das mindestens eine Lichtquelle und eine Steuervorrichtung zur Steuerung der Stromversorgung der Lichtquelle umfasst, **dadurch gekennzeichnet, dass** die Steuervorrichtung einen der Ansprüche 1 bis 8 erfüllt.

10. Lichtmodul nach Anspruch 9, **dadurch gekennzeichnet, dass** die Lichtquellen lichtemittierende Halbleiterelementquellen sind.

## Claims

1. Device (100) for controlling the electrical supply of at least one branch (10) of an electronic circuit comprising at least one light source (12) of a motor vehicle, the device (100) comprising a converter circuit (110) configured to convert a constant current input voltage V_{IN} into a load voltage, and in particular a load voltage, applied to said at least one circuit branch (10), and control means (120) configured to control the converter circuit (110) by means of a periodic signal S having a predetermined frequency f,
**characterized in that** the device comprises
detection means (130) configured to detect a disturbance in the input voltage V_{IN}, and to determine the frequency fₚ of that disturbance ;
matching means (150) configured to modify the frequency of said periodic signal S as a function of the detected frequency fₚ of the disturbance.

2. A device according to claim 1, **characterized in that** said device further comprises comparison means (140) configured to compare the detected frequency fₚ of the disturbance with the predetermined frequency f of said periodic signal, and adaptation means (150) are configured to modify the frequency of said periodic signal according to the result of said comparison.

3. A device according to claim 2, **characterized in that** the detection means are configured to generate a binary periodic signal having the detected frequency, and to transmit the binary periodic signal to the comparison means.

4. Device according to one of claims 1 to 3, **characterized in that** the detection means comprise an electronic circuit.

5. Device according to one of claims 1 to 4, **characterized in that** it comprises a microcontroller element programmed to carry out the means of comparison and/or adaptation.

6. Device according to one of claims 1 to 5, **characterized in that** the adaptation means are configured to modify the frequency of said periodic signal if the difference between the frequencies compared is less than a predetermined threshold.

7. A device according to one of claims 1 to 6, **characterized in that** the converter circuit is a SEPIC (Single Ended Primary Inductor Converter) switching circuit.

8. Device according to one of claims 1 to 7, **characterized in that** the periodic signal S generated by the control means is a pulse-width-modulated signal for controlling the intensity of the luminous flux emitted by the light sources.

9. A light module for a motor vehicle comprising at least one light source and a control device for controlling the power supply to the light source, **characterized in that** the control device complies with one of claims 1 to 8.

10. Light module according to claim 9, **characterized in that** the light sources are light-emitting semiconductor element sources.
